# EUROPEAN PATENT APPLICATION

(11) **EP 4 147 839 A1**
(43) Date of publication of application: **15.03.2023**
(21) Application number: 22195059.5
(22) Date of filing: 12.09.2022
(51) Int. Cl.: B28D 1/24, C03B 33/07, C03B 33/027

(54) **CUTTING MACHINE FOR CUTTING A GLASS SHEET**

(30) Priority: 13.09.2021 IT 202100023579
(71) Applicant: Bottero S.p.A., 12100 Cuneo (IT)
(72) Inventor: BRIGNONE, Michelangelo, 12100 CUNEO (IT); ARNAUDO, Fabio, 12100 CUNEO (IT); OLIVIERI, Andrea, 12100 CUNEO (IT); TECCHIO, Marco, 12100 CUNEO (IT)
(74) Representative: Studio Torta S.p.A.

(57) **Abstract**

A sheet (2) of stratified glass is cut on a cutting machine (1) having at least one support surface (9) for the sheet (2) to be cut, and a glass sheet engraving assembly (13) having an upper engraving device (14) arranged above the support surface (9) and a lower engraving device (35) arranged below the support surface (9) and different from the upper engraving device (14); at least one (14) of the engraving devices being a controlled engraving device.

## Description

### CROSS-REFERENCE TO RELATED APPLICATIONS

This patent application claims priority from Italian patent application no. 102021000023579 filed on September 13, 2021.

### TECHNICAL FIELD

The present invention relates to a cutting machine for cutting a glass sheet, in particular a stratified glass sheet, to which the following disclosure will explicitly refer without thereby losing generality.

### BACKGROUND

In order to cut a stratified glass sheet, i.e. of the type comprising two lateral glass sheets and an intermediate layer of thermoplastic material, it is known to use cutting machines each comprising a horizontal support surface and a device for feeding the sheet to be cut onto the surface in a longitudinal direction. Each machine then comprises, along the feeding direction, a fixed cutting station for cutting the sheet and, within said cutting station, two fixed cutting bridges arranged facing one another and one above and the other below the support surface. The cutting bridges each comprise a relative fixed crosspiece orthogonal to the feeding direction and a motorized carriage that is movable in opposite directions along the relative crosspiece in a fixed rectilinear cutting direction.

The cutting machine further comprises a pair of engraving or weakening or scoring devices identical to one another, arranged one above and the other below the support surface and each carried by a respective carriage in order to each obtain, on the relative glass sheet, a respective engraving or weakening or scoring line facing the engraving or weakening line obtained by the other engraving or weakening device; along the engraving or scoring or weakening lines, the stratified glass sheet is subsequently broken so as to form two sheet sections joined together by the layer of thermoplastic material.

Some mechanical engraving devices comprise a mechanical engraving member defined by an engraving wheel or by a fixed engraving member or engraving awl.

In cases where engraving wheels are used, the wheel is hinged to a free end of a relative vertical support shaft in order to rotate idly around a horizontal axis parallel to the support surface, and is pushed, in use, against the relative sheet acting on the relative vertical arm.

Depending on the type of machine and on the geometry of the engraving line to be obtained, the pairs of engraving devices are differentiated into fixed devices, self-orienting devices and controlled orientation devices.

In the fixed devices, the engraving wheels are free to rotate around the horizontal axis but are both maintained in an angularly fixed position around a vertical axis with respect to the relative carriage. For this reason, the fixed devices, in practice, are suitable when the sheet has to be cut along rectilinear cutting lines orthogonal to the feeding direction of the sheet, i.e. in order to form rectangular or square sheet sections.

Whereas, when the machine has to be able to perform cuts along any engraving lines and, thus, also along rectilinear cutting lines but forming an angle other than 90° with the feeding direction of the sheet or having at least one curvilinear segment, the pair of self-orientating devices or a pair of controlled orientation devices is used.

Both in self-positioning devices and in controlled positioning devices, both support shafts of the engraving wheels are coupled to the relative carriages in a rotatable manner around a common vertical axis, generally indicated by z-axis.

In the self-orienting devices, both support shafts together with the respective engraving wheels freely rotate in opposite directions around the Z-axis.

Whereas, in the pair of controlled orientation devices, the angular position of both wheels and thus their orientation around said z-axis and with respect to the relative carriage are controlled by respective electric gearmotors independent of one another, which are in turn commanded and controlled by a command and control unit.

Although universally used, since they are able to carry out also complex engravings, the pairs of devices with engraving wheels rotatable around the z-axis are insufficiently satisfactory since neither the self-positioning devices nor the controlled positioning devices can ensure the provision of high-quality sheet sections, i.e. with perimeter edges free of imperfections, chips and, in general, micro-triggers of fracture, and, above all, they do not allow maintaining unvaried the quality of the sections even after a long use of the machine.

All the aforementioned is essentially due to the difficulty of correctly orienting and maintaining oriented the engraving wheels so that the cutting edges of said engraving wheels are exactly tangent to the intended engraving line at each point of said engraving line.

In particular, in the self-orienting devices, the aforementioned difficulty mainly occurs in the initial segment of each engraving line since the engraving wheels are normally, at the moment they are pushed against the sheet, in the angular position of end cut of the preceding line, and it is only the contact with the sheet being fed that orients it in the correct tangency position.

For this reason, for the entire time necessary for the engraving wheels to reach the correct angular tangency position, said engraving wheels pivot while dragging against the sheet and make an anomalous engraving and often only ill-defined grooves unlike what is desired. Once the engraving wheels are oriented, the cut is satisfactory and even better than the one performed with devices with a controlled z-axis.

For this reason, in many cases, during the subsequent breaking, and especially in the presence of angles less than 90° as occurs in contour cuts, the break crack often propagates along a line different from the intended engraving line, forming a sheet section which is locally different or completely different than what is intended.

In order to overcome this problem, the engraving line is prolonged in a perimeter portion of the sheet, which is then removed and constitutes a processing waste with obvious costs that are far from negligible.

The problem of the orientation of the pair of engraving wheels is only partially resolved by the controlled orientation devices since the engraving wheels are each controlled by an electric gearmotor thereof and for this reason theoretically always both arranged in the correct tangency position.

However, it has been verified in experiments that the perimeter edges of the obtained sections anyway have micro-imperfections along the entire perimeter edge and it has been verified, still in experiments, that said micro-imperfections are due precisely to the fact that, during the engraving, the wheel has an imposed angle that is different from the one desired. This effect becomes significant as the radius of curvature of the engraving line decreases and the thickness of the glass sheet increases.

It has also been possible to verify, still in experiments, that such imperfections are generally minimal at the beginning of the engraving, but are, in some cases, significantly marked at intermediate points of said engraving line and, above all, if the engraving line has a complex profile and/or several changes of curvature typical of contour cuts.

The lack of homogeneity of the engraving line causes major problems in the subsequent processing operations of the sheet section, processing operations which are all the more precise and satisfactory the better the preceding engraving and the subsequent cutting are.

It has also been possible to verify, still in experiments, that, in some cases, the imperfections found on the perimeter edges of the sections were due to the lack of synchronization of the two engraving wheels, which at the verified times were in angular positions, in some cases, different from one another and, in other cases, both different from the intended angular position.

Still in experiments, it has also been possible to verify that the angular positioning or orientation error of each of the engraving wheels was not immediately detectable and thus correctable since it was caused, in some cases, by the mechanical transmissions interposed between each motor and the relevant engraving wheel, which, although outwardly identical, have different clearances from the very outset of their use or which occurred with the progressive and different wear of the various components of said mechanical transmissions.

In other cases, the different angular positioning of the pair of engraving wheels was due to the control and command in position of the electric motors for rotating the engraving wheels around the z-axis with the consequence that, often, one of the engraving wheels would drag the other or one would try to dominate the other, resulting in localized stresses or strains on the glass sheets, which were then responsible for chips, abrasions or partial disintegration of the edges or corners of the cut glass sections.

In all cases, the perimeter edge was still acceptable in an initial segment of the engraving line but was not so satisfactory in the intermediate segments.

Moreover, the controlled orientation devices are extremely expensive and particularly bulky, hence they are only applied to dedicated cutting machines which, due to the use of such engraving devices, are relatively complex in terms of their production and assembly especially in the area below the support surface, where countless other devices are already present which must be analysed and configured so as to make a space available for the accommodation of the lower engraving device.

The bulkiness of the controlled orientation devices does not allow carrying out retrofit operations of the conventional cutting machines with engraving wheels idly rotatable around the z-axis.

### SUMMARY

The object of the present invention is to provide a cutting machine for cutting a glass sheet, whose manufacturing characteristics allow solving the problems set out above in a simple and cost-effective manner.

The particular object of the present invention is to provide a cutting machine easily controllable and capable of enabling the production of high-quality sections and, in particular, having perimeter edges free of chips or surface imperfections and with a constant quality over time.

According to the present invention, a cutting machine for cutting a glass sheet comprising two lateral glass sheets and an intermediate layer of thermoplastic material is provided, the machine comprising a fixed frame, a support surface for the glass sheet to be cut and engraving means for obtaining a respective weakening line on each of said lateral glass sheets; said engraving means comprising an upper engraving device arranged above said support surface and a lower engraving device arranged below said horizontal plane, characterized in that said upper engraving device and said lower engraving device are different from one another.

Preferably, in the above-defined machine, the engraving devices are mechanical engraving devices and, conveniently, one of the devices is a device controlled by an electronic command and control unit.

### BRIEF DESCRIPTION OF THE DRAWINGS

The invention will now be described with reference to the accompanying figures, which illustrate a non-limiting example embodiment thereof, wherein:
Figure 1 is a schematic perspective view of a preferred embodiment of a cutting machine for cutting a glass sheet provided according to the principles of the present invention;
Figure 2 illustrates, in a perspective view and on a significantly enlarged scale, a detail of Figure 1; and
Figures 3 to 6 illustrate, schematically, a pair of engraving members of the machine of Figures 1 and 2 in different operating positions.

### DESCRIPTION OF EMBODIMENTS

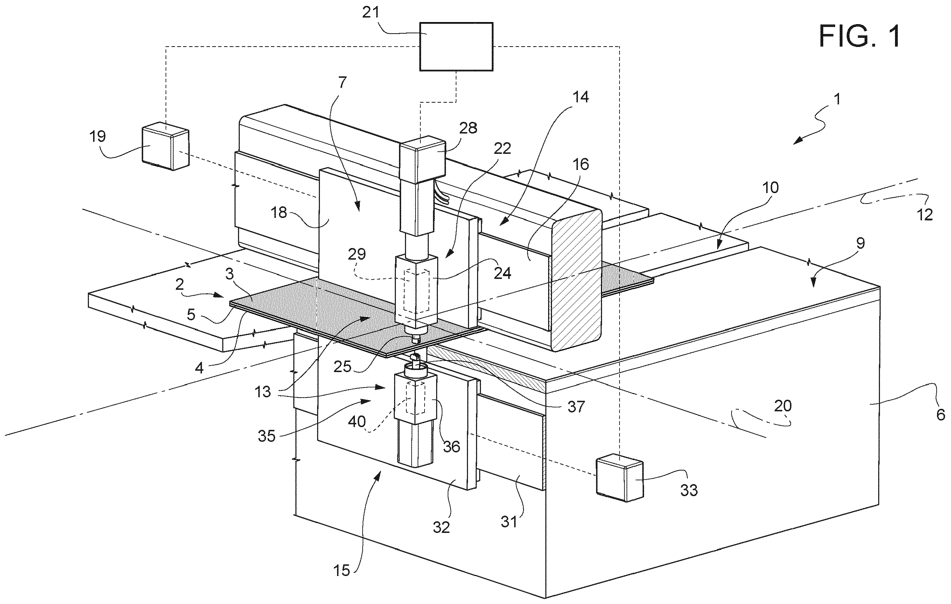

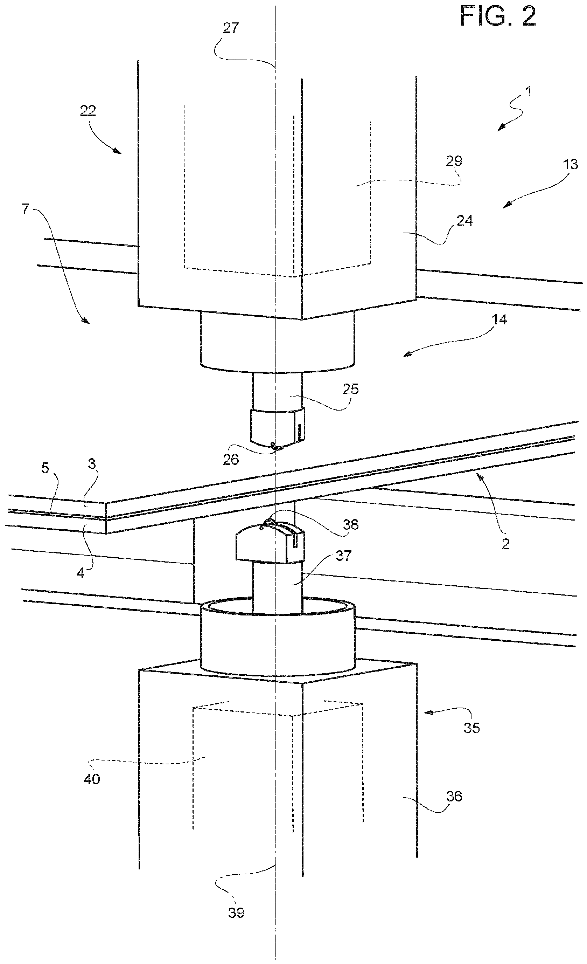

In Figures 1 and 2, reference numeral 1 indicates, as a whole, a cutting machine for cutting a sheet 2 of stratified glass comprising two lateral glass sheets 3 and 4 and an intermediate layer 5 of thermoplastic material, generally known as PVB.

The machine 1 comprises a fixed frame 6, a sheet-engraving station 7, which is also fixed, and a horizontal sheet support surface 9 passing through the engraving station 7.

Associated with the support surface 9 is a moving device 10 for moving the sheet 2 on the support surface 9, which is configured to translate said sheet in opposite directions in a longitudinal direction 12 of movement (Figure 1).

In the engraving station 7, the machine 1 further comprises a sheet-engraving or sheet-weakening assembly, indicated by 13 and which, in turn, comprises an upper engraving unit 14 arranged above the support surface 9 for engraving or weakening the glass sheet 3 and a lower engraving unit 15 arranged below the support surface 9 for engraving or weakening the glass sheet 4.

With reference to Figure 1, the upper engraving unit 14 comprises, in turn, a guide 16 firmly connected to the fixed frame 6 and an upper carriage 18, which is coupled to the guide 16 in a slidable manner and is actuated by a relative electric motor 19 for sliding in opposite directions in a direction 20 orthogonal to the longitudinal direction 12 under the command and the control of an electronic command and control unit, known per se and indicated by 21.

The carriage 18 carries a motorized controlled orientation device for engraving the sheet 3, which is indicated by 22. The device 22 forms part of the engraving unit 14 and comprises, in turn, an attachment structure 24 firmly connected to the carriage 18 and a vertical support shaft 25 for supporting an engraving wheel 26.

The shaft 25 is rotatable with respect to the attachment structure 24 around its own vertical axis 27 under the thrust of a gearmotor 28 known per se and controlled by the command and control unit 21.

Finally, the device 22 comprises a known and schematically illustrated actuator 29 for moving the shaft 25 vertically towards the support surface 9 and forcing the relative engraving wheel 26 against the glass sheet 3.

Still with reference to Figure 1, the lower engraving unit 15 comprises a guide 31 firmly connected to the fixed frame 6 and a lower carriage 32, which is coupled to the guide 31 in a slidable manner and is actuated by a relative electric motor 33 for sliding in opposite directions in the direction 20 under the command and the control of the command and control unit 21.

The lower carriage 32 carries a self-orienting or freely orienting engraving device 35, which forms part of the lower engraving unit 15 and comprises, in turn, an attachment structure 36 firmly connected to the lower carriage 32 and a vertical support shaft 37 for supporting an engraving wheel 38.

The vertical shaft 37 is freely rotatable or angularly idle with respect to the support structure around its own vertical axis 39 and, similarly to the device 22, is pushed together with the wheel 38 towards the support surface 9 by a known and schematically illustrated actuator 40 configured to force the wheel 37 against the glass sheet 4.

The wheel 37 has a perimeter cutting edge, which is arranged in an eccentric position with respect to the vertical axis 39.

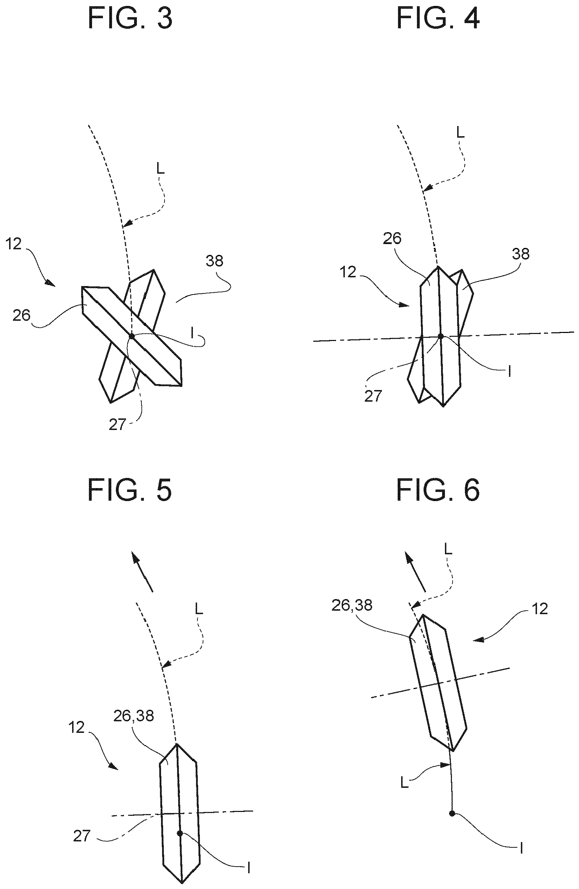

The operation of the machine 1 will now be described starting from the condition illustrated in Figure 3, in which the wheels 26 and 38 are arranged at a starting point I of the intended engraving or weakening line L and each one is arranged in a position spaced apart from the relative sheet 3,4 and in any angular position around the relative axes 27,39.

Starting from such condition, before advancing the wheels 26 and 38 towards the support surface 9 and forcing the wheels 26 and 38 against the respective glass sheets 3 and 4, the unit 21 commands the gearmotor 28, which rotates the shaft 25 and the engraving wheel 26 around the axis 27 and orients the wheel 26, so as to arrange it in a position tangent to the engraving line L, in the starting point I, as is visible from Figure 4.

Whereas, the angular position of the engraving wheel 38 around the axis 39 is not modified in any way, hence it continues to be arranged in an arbitrary starting engraving position which normally corresponds to the one in which it was arranged at the end of a preceding engraving.

Starting from this condition, the command and control unit 21 forces the wheels 26 and 38 against the glass sheets 3 and 4 and simultaneously moves the sheet 2 in the longitudinal direction 12 and the carriages 18 and 32 in the direction 20. When the sheet 2 and the carriages 18 and 32 start to move, the wheel 26 is already arranged in the correct tangency position with respect to the engraving line (Fig.4) while the wheel 38, by effect of the contact with the sheet 4 and of its eccentricity with respect to the axis 39, generates a torque on the shaft 37 which, being free, rotates around the axis 39 until also the wheel 38 is arranged in a position tangent to the engraving line L, as is visible in Figure 5.

At this point, continuing to move the sheet 2 and the carriages 18 and 32 so that the wheels travel along the intended engraving line L and controlling the angular position of the engraving wheel 25 only, the sheet 2 is engraved.

During the movement, the wheel 38 self-orients so as to travel along the same engraving line L, as is visible in Figure 6.

It is evident from the foregoing that the described engraving assembly 12 allows, on the one hand, engraving or weakening the sheets 3,4 while always following the desired engraving line L and, on the other hand, making cut sheet sections free of chips or abrasions of the cut edges and, in general, of obvious perimeter defects.

The foregoing is essentially due to the fact that only one of the pair of engraving devices 14 and 35, and, in particular, the engraving device 14, is an electronically controlled angular orientation device, hence the relative engraving wheel 26 is always tangent to the engraving line L both in the starting point I and in all the intermediate points of said engraving line L, while the other engraving device, i.e. the device 35, is a free or autonomous device in which the engraving wheel 38 self-orients, always arranging itself in tangency to said engraving line L, except in the initial segment of the engraving line L.

Although the device 35 does not have its maximum efficiency in the initial segment of the engraving line, it has been possible to verify in experiments that the correct and complete engraving of the sheet 3 by means of the controlled device 14 is sufficient to cause the sheet 2 to break exactly along the intended engraving line and also in the initial section of the engraving and thus to make segments having the desired shape and geometry.

In light of the foregoing and with respect to the solutions with both engraving devices being free or self-orienting, the assembly 13 allows preventing perimeter wastage of the sheets and thus having significant savings in glass material.

With respect to the pair of controlled orientation engraving devices of the known solutions, in the assembly 13, the orientation imposed on the engraving wheel 26 does not influence and does not oppose and, in general, does not interfere neither directly nor indirectly with the positioning of the engraving wheel 38, hence on the perimeter edges of the cut sheet sections there are no appreciable imperfections, scratches, chips or microfractures not only at the start of the engraving, but also at intermediate points of said engraving line, whatever the geometry of the engraving line is.

Moreover, the use of a single controlled engraving device allows, still with respect to the solutions with both engraving devices being controlled orientation engraving devices, significantly reducing costs with regard both to the mechanical engraving components and with regard to the circuitry and in general the various control members of the electric motor thereof.

From a functional point of view and as far as the quality of the finished product is concerned, it has been possible to verify still in experiments that it is irrelevant whether the controlled engraving device is arranged above or below the support surface.

However, the arrangement above the support surface has the advantage of making a considerable amount of space available below the support surface 9 or of simplifying the machine still below said support surface, since the free or self-positioning device has a much smaller bulk than that of a controlled orientation device.

Whereas, above the support surface 9 there are no substantial limitations with regard to the available space.

For the same reason, the solution with a controlled engraving device arranged above the support surface 9 makes easy and immediate the replacement of the devices in existing machines having a pair of self-positioning engraving devices.

It is evident from the foregoing that modifications and variations can be made to the described machine 1 without thereby departing from the scope of protection defined by the independent claims.

In particular, the mode in which the engraving devices are supported and moved or the mode in which the sheet to be engraved is supported and moved could be different from what indicated.

The engraving or weakening devices could also be different from the ones described in terms of their design or concept; for example, one of the engraving devices could be of an optical type or a mechanical engraving device with an engraving element other than a wheel or provided with a different control device for controlling the position of the wheel.

## Claims

1. A cutting machine for cutting a glass sheet comprising two lateral glass sheets and an intermediate layer of thermoplastic material, the machine comprising a fixed frame, a support surface for the glass sheet to be cut and engraving means for obtaining a respective weakening line on each of said lateral glass sheets; said engraving means comprising an upper engraving device arranged above said support surface and a lower engraving device arranged below said horizontal plane, **characterized in that** said upper engraving device and said lower engraving device are functionally different from one another.

2. The machine according to claim 1, **characterized in that** only one of said engraving devices is a motorized engraving device controlled by an electronic command and control unit.

3. The machine according to claim 2, **characterized in that** said controlled engraving device is the one arranged above said support surface.

4. The machine according to claim 2 or 3, **characterized in that** it comprises means for feeding the glass sheet to be cut onto the support surface in a longitudinal direction; said engraving means comprising an upper motorized carriage carrying said upper engraving device, and a lower motorized carriage carrying said lower engraving device; said carriages being movable in opposite directions in a sliding direction orthogonal to said feeding direction and parallel to said support surface; said upper engraving device being provided with an upper engraving member rotatable around a first vertical axis and the lower engraving device being provided with a lower engraving member rotatable around a second vertical axis; said controlled engraving device comprising motorized actuator means for rotation of the relative said engraving member around the relative said vertical axis and an electronic command and control unit of said motorized actuator means and configured to control the angular position of the relative said engraving member around the relative said vertical axis.

5. The machine according to claim 4, **characterized in that** each said engraving device comprises support means for said engraving member rotatable in opposite directions around a relative said vertical axis, and **in that** said motorized actuator means comprise an electric motor connected to said electronic command and control unit for rotating said support means around the relative said vertical axis.

6. The machine according to claim 4 or 5, **characterized in that** one of said engraving members is rotatable idly in opposite directions around the relative said vertical axis.

7. The machine according to any one of claims 4 to 6, **characterized in that** said motorized rotation actuator means are arranged above said support surface.

8. The machine according to any one of the preceding claims, **characterized in that** both said upper and lower engraving devices comprise a member rotatable around an axis horizontal or parallel to said support surface.
